# EUROPÄISCHE PATENTSCHRIFT

(11) **EP 1 537 834 B1**
(45) Veröffentlichungstag und Bekanntmachung des Hinweises auf die Patenterteilung: **28.05.2008**
(21) Anmeldenummer: 03023621.0
(22) Anmeldetag: 16.10.2003
(51) Int. Cl.: A61C 8/00

(54) **Verbessertes Übertragungsteil für ein Implantat**
Improved abutment for an implant
Appui d'implant ammélioré

(43) Veröffentlichungstag der Anmeldung: 08.06.2005
(73) Patentinhaber: Straumann Holding AG, 4437 Waldenburg (CH)
(72) Erfinder: Memmolo, Marcello, 4450 Sissach (CH); Günter, Daniel, 4437 Waldenburg (CH)
(74) Vertreter: Modiano, Micaela Nadia

(56) Entgegenhaltungen:
- WO-A-97/06930
- WO-A-02/087461
- US-A- 5 078 605
- US-A- 5 947 733

## Beschreibung

Die vorliegende Erfindung betrifft allgemein ein verbessertes Übertragungsteil oder Halteelement für ein Implantat und insbesondere ein verbessertes Übertragungsteil oder ein Halteelement für ein Implantat, das geeignet ist, das Implantat in einer mit Flüssigkeit gefüllten Innenampulle dauerhaft sicher zu halten.

### Stand der Technik

Aus der WO-A1-98 55039 (entsprechend US-B1-6 261 097) ist ein rotationssymmetrisches Halteelement für ein in Knochen einzusetzendes Implantat, insbesondere ein Dentalimplantat und eine Innenampulle oder Ampulle für die Aufbewahrung des Implantats bekannt, worin das Halteelement mittels eines Schraubenschafts schraubend mit dem Implantat in Eingriff bringbar ist. Die Einheit, bestehend aus dem Halteelement und dem darauf verschraubten Implantat, kann in eine Innenampulle zur Aufbewahrung und zum Transport des Implantats eingebracht werden, die eine Fixierpartie aufweist, in welche das Halteelement direkt oder indirekt einsteckbar ist und die eine seitliche, der Länge der Einheit entsprechende Aussparung hat, durch die das Implantat mit dem Haltelelement entfernbar ist. Das Halteelement aus dem Stand der Technik weist an dem dem Schraubenschaft entgegengesetzten Ende einen Fortsatz mit einem Aussenvielkant (insbesondere einem Achtkant) auf, auf dem ein Werkzeug, z. B. ein Eindrehwerkzeug, aufsteckbar ist. Ein Sicherungselement, vorzugsweise ein O-Ring, ist in eine Radialnut unterhalb des Fortsatzes vorgesehen. Darüber hinaus wird gemäß der WO-A1-98 55039 eine Aussenkapsel mit einem darauf aufschraubbaren Verschlussdeckel derart ausgebildet, dass das Halteelement mit dem Implantat axial zwischen dem Boden der Aussenkapsel und dem Verschlussdeckel arretierbar ist. Der Gesamtinhalt der WO-A1-98 55039 wird durch die Bezugnahme hierin eingeschlossen.

US-B1-6 247 932 beschreibt einen Behälter für ein dentales Implantat, worin das Übertragungsteil einrastend mit dem Implantat verbunden ist. Der bekannte Behälter ist analog zur Aussenkapsel der WO-A1-98 55039 ausgebildet, um das Übertragungsteil mit dem aufgeschnappten Implantat aufzunehmen und zu sichern. Zusätzlich sieht US-B1-6 247 932 Mittel zur Drehsicherung des Implantats in Bezug zum Übertragungsteil bzw. Mittel zur Kraftübertragung vom Übertragungsteil auf das Implantat vor.

Ein Übertragungsteil mit einem Schnappmechanismus ist aus der US-B1-6 206 696 bekannt, wobei die Verbindung mit dem Implantat durch ein Einschnappen in eine Einheilschraube erfolgt. Ähnliche Übertragungsteile sind aus der WO-A1-00 02496 und der WO-A1-01 50978 bekannt, die mit Hilfe eines Einschnappvorgangs mit einer Einheilschraube, die am Implantat befestigt ist, verbindbar sind.

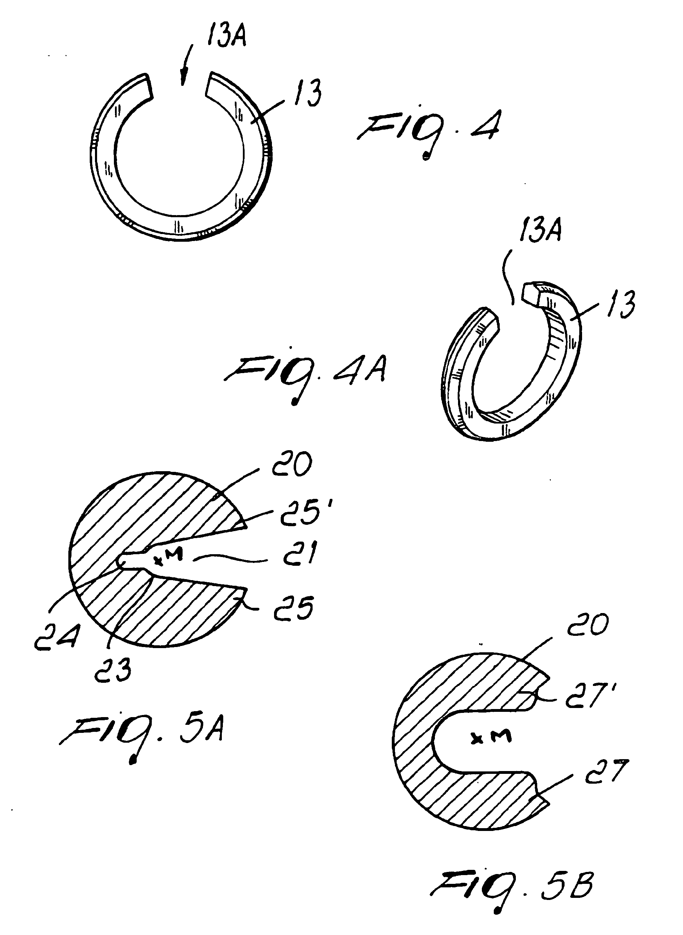

WO 02/087461 A1 offenbart eine Anordnung aus einem Implantat 1, einem Adapter 3 und einer modifizierten, separaten Übertragungskappe 2, die das Implantat 1 und den Adapter 3, wie in der Fig. 5B gezeigt, zusammenhält. Darüber hinaus weist die Übertragungskappe 3 eine Wulst 290 mit einem Kragen 29 auf, der in den Adapter 2 einrastet. Ein Haltering 322 wird, wie in der Fig. 7E gezeigt, zur Klemmung mit der Einschnürung 402 des Behälters bereitgestellt.

US-A-5 078 605 offenbart eine Muffe aus PEEK für einen Dental- bzw. Knochenbohrer.

### Zusammenfassung der Erfindung

Angesichts des vorstehenden Standes der Technik besteht eine Aufgabe der vorliegenden Erfindung in der Bereitstellung eines Übertragungsteils oder Halteelements für ein Implantat, insbesondere für ein dentales Implantat, das sich sowohl durch eine sichere als auch eine leicht herstellbare Verbindung mit einem Implantat auszeichnet.

Im Rahmen der obigen Aufgabe besteht eine besondere Aufgabe der vorliegenden Erfindung in der Bereitstellung eines Übertragungsteils oder Halteelements für ein Implantat, insbesondere für ein dentales Implantat, das in einem flüssigen Medium, beispielsweise in einer sterilen Lagerungsflüssigkeit für ein dentales Implantat, die sichere Verbindung mit dem Implantat aufrechterhält.

Diese und weitere der nachstehenden Beschreibung zu entnehmenden Aufgaben werden von einem Übertragungsteil für ein dentales Implantat gemäß den anliegenden Ansprüchen gelöst.

Weitere Merkmale und Vorteile der vorliegenden Erfindung sowie die Wirkungsweise verschiedener Ausführungsformen der vorliegenden Erfindung werden unten mit Bezug auf die begleitenden Zeichnungen beschrieben. Die begleitenden Zeichnungen veranschaulichen die vorliegende Erfindung und dienen zusammen mit der Beschreibung weiterhin dazu, die Grundsätze der Erfindung zu erklären und einem Fachmann auf dem betreffenden Gebiet zu ermöglichen, die Erfindung herzustellen und zu verwenden. Dabei zeigen:
Fig. 1 eine Ansicht eines Übertragungsteils gemäß einer Ausführungsform der vorliegenden Erfindung;
Fig. 1A eine vergrößerte Ansicht eines Abschnitts des Übertragungsteils der Fig. 1, in dem eine Radialnut zur Aufnahme eines erfindungsgemäßen Klemmrings ausgebildet ist;
Fig. 1B eine rechte Seitenansicht des Übertragungsteils der Fig. 1;
Fig. 1C eine linke Seitenansicht des Übertragungsteils der Fig. 1;
Fig. 2 eine Schnittansicht eines schematischen Übertragungsteils nach der Fig. 1 mit aufgesetztem dentalen Implantat und einer Innenampulle zur Aufbewahrung und zum Transport des Implantats;
Fig. 2A eine vergrößerte Ansicht eines Abschnitts des Übertragungsteils und des Implantats der Fig. 1A, in dem eine Radialnut zur Aufnahme eines erfindungsgemäßen Klemmrings ausgebildet ist;
Fig. 3 eine perspektivische Ansicht des Übertragungsteils der Fig. 2 mit dem aufgesetzten dentalen Implantat und der Innenampulle zur Aufbewahrung und zum Transport des Implantats;
Fig. 3A eine abgewandelte Ausführungsform der Innenampulle der Fig. 3:
Fig. 4 eine Draufsicht des Klemmrings des erfindungsgemäßen Übertragungsteils der Fig. 1;
Fig. 4A eine perspektivische Ansicht des Klemmrings des erfindungsgemäßen Übertragungsteils der Fig. 1;
Fig. 5A ist eine Schnittansicht durch eine obere Fixierpartie der Ampulle gemäß der vorliegenden Erfindung; und
Fig. 5B ist eine Schnittansicht durch eine untere Fixierpartie der Innenampulle gemäß der vorliegenden Erfindung.

### Beschreibung der bevorzugten Ausführungsformen der Erfindung

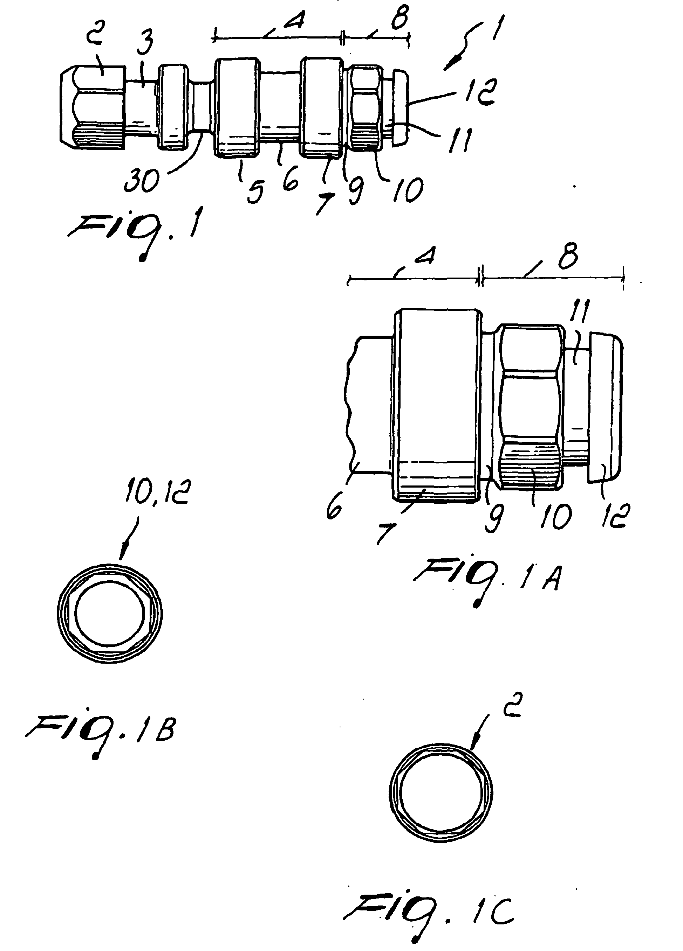

Unter Bezugnahme auf die Figuren 1 bis 2A wird eine derzeit bevorzugte Ausführungsform eines rotationssymmetrischen Übertragungsteils oder Halteelements gemäß der vorliegenden Erfindung beschrieben, in der das Übertragungsteil allgemein mit dem Bezugszeichen 1 bezeichnet wird.

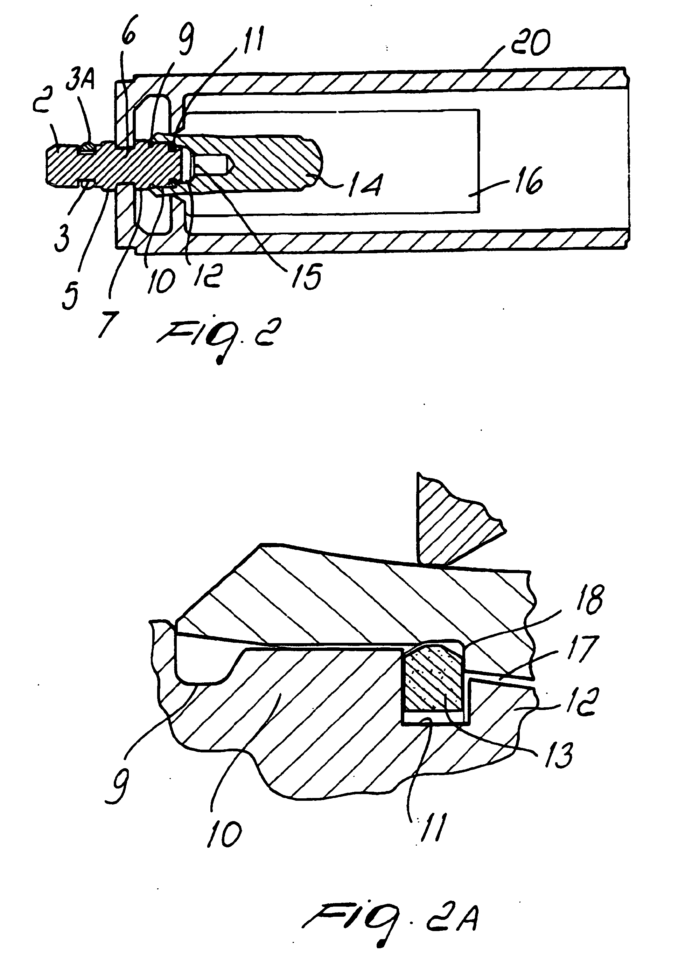

Das Übertragungsteil 1 weist analog zur WO-A1-98 55039 einen oben endenden freien Fortsatz 2 mit einem Aussenvielkant (vorzugsweise einem Achtkant) und eine angrenzende Radialnut 3 auf, um darin ein Sicherungselement, vorzugsweise einen in der Fig. 2 gezeigten O-Ring 3A, anzuordnen. Am freien Fortsatz 2 ist direkt ein Eindrehwerkzeug oder ein Adapter (nicht gezeigt) für ein Eindrehwerkzeug oder dergleichen ansetzbar, mit dem das Implantat berührungslos aus einer Innenampulle entfernt werden kann. Die Innenampulle ist in eine herkömmliche Aussenkapsel einsetzbar.

Darüber hinaus weist das Übertragungsteil 1 analog zur WO-A1-98 55039 eine Fixierpartie auf, die allgemein mit dem Bezugszeichen 4 bezeichnet wird und die unterhalb des Fortsatzes 2 befindlich ist. Die Fixierpartie 4, die zur Aufnahme in die Innenampulle ausgebildet ist, umfasst einen ersten und einen zweiten zylindrischen Bund 5 bzw. 7, zwischen denen ein im Durchmesser reduzierter Zylinderabschnitt 6 liegt. Zwischen dem Fortsatz 2 und der Fixierpartie 4 wird eine mit dem Bezugszeichen 30 gezeigte Sollbruchstelle gebildet.

Erfindungsgemäß weist das Übertragungsteil 1 weiterhin eine Klemmpartie auf, die allgemein mit dem Bezugszeichen 8 bezeichnet wird und die unterhalb der Fixierpartie 4 befindlich ist. Die Klemmpartie 8 umfasst eine erste Radialnut 9, ein Kraftübertragungselement 10, eine zweite Radialnut 11 und ein kegelstumpfförmiges Ende 12. Das Kraftübertragungselement 10 hat einen Aussenvielkant, vorzugsweise einen Achtkant als Oberfläche, der im Wesentlichen gleich oder geringfügig kleiner im Querschnitt als der Aussenvielkant des Fortsatzes 2 ist. In der vereinfachten Darstellung der Fig. 2 wird diese Sollbruchstelle 30 weggelassen.

Erfindungsgemäß ist die zweite Radialnut 11 zur Aufnahme eines Klemmrings 13 ausgebildet, der mit einem Spalt 13A zur Erleichterung der Montage ausgestattet ist. Besonders vorteilhaft ist der Klemmring 13 aus Polyetheretherketon (PEEK) ausgebildet. Der PEEK Klemmring weist z. B. im Vergleich zu den herkömmlichen Silikon O-Ringen Vorteile in einer flüssigen Verpackung auf, da u.a. der PEEK Ring beim Sterilisieren keine Verunreinigungen wie Kohlenstoffatome freisetzt, die sich auf das Implantat ablagern und somit später die Einheilung des Implantats beeinträchtigen können.

Die Fig. 2 zeigt den erfindungsgemäßen Klemmring 13 in einem montierten Zustand mit einem schematisch dargestellten dentalen Implantat 14, das ähnlich dem dentalen Implantat der WO-A1-98 55039 sein kann. Es ist jedoch für den Fachmann auf dem Gebiet der Implantologie ohne weiteres ersichtlich, dass das Übertragungsteil der vorliegenden Erfindung nicht auf das in der WO-A1-98 55039 gezeigte Implantat beschränkt ist, sondern dass es in Verbindung mit weiteren herkömmlichen Implantaten oder sonstigen Abutments zum Einsatz gebracht werden kann, ohne sich vom Schutzumfang der Erfindung, wie in den anliegenden Ansprüchen definiert, zu lösen.

Das dentale Implantat 14 der Fig. 2 weist einen Innenraum 15 auf, der mit einer zum Aussenvielkant des Kraftübertragungselements 10 passenden Fläche 17 (z. B. Achtkant) ausgebildet ist, so dass eine drehsichere und kraftschlüssige Verbindung zwischen dem Übertragungsteil 1 und dem dentalen Implantat 14 realisiert wird.

Vorzugsweise ist der für das spätere Einsetzen des dentalen Implantats 14 vorgesehene Implantat-Hinterstich 18 auch für die klemmende Aufnahme des Klemmrings 13 passend dimensioniert.

Eine konische Implantatschulter 19 im oberen Bereich des Implantats 14 umschließt dicht die erste Ringnut 9 des Übertragungsteils 1.

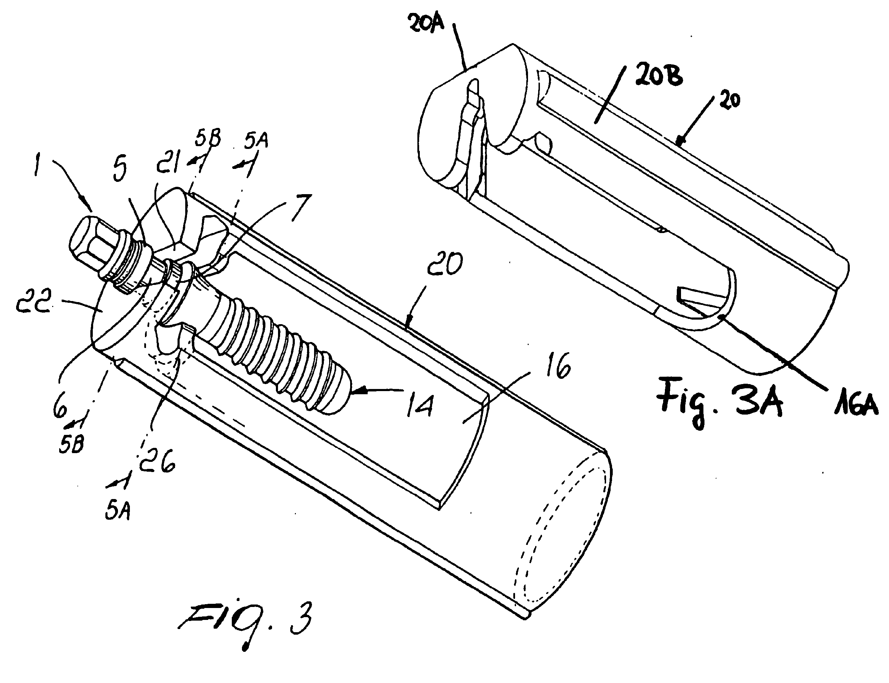

Das dentale Implantat 14 in Verbindung mit dem daran geklemmten Übertragungsteil 1 kann in eine Innenampulle 20 mit einer großflächigen Aussparung 16 eingebracht werden, wobei die Innenampulle 20 in eine nicht gezeigte, verschließbare Aussenkapsel zur Lagerung und zum Transport des Implantats eingebracht werden. Die in der Fig. 3 gezeigte Aussparung 16 weist eine im Wesentlichen rechteckige Form auf, obgleich sie in ihrer unteren Partie 16A, wie in Fig. 3A gezeigt, eine abgerundete Form haben kann, was die Handhabung des Implantats 14 erleichtert.

Sowohl die Innenampulle 20 als auch die Aussenkapsel können gemäß der WO-A1-98 55039 realisiert werden, obgleich auch andere Ausführungen dieser Elemente mit dem erfindungsgemäßen Übertragungsteil bzw. mit der Kombination dieses Übertragungsteils mit dem Implantat einsetzbar sind. Selbstverständlich muss die Aussenkapsel dicht abschließbar sein, falls sie eine Flüssigkeit, wie beispielsweise einen Elektrolyt oder eine wässrige Lösung für die Lagerung des dentalen Implantats enthält.

Ein weiterer Aspekt der vorliegenden Erfindung betrifft eine verbesserte Innenampulle 20 mit einer oberen Fixierpartie 22, die bis zur großflächigen Aussparung 16 reicht. Die obere Fixierpartie 22 ist analog der Fixierpartie der WO-A1-98 55039 nachgebildet und weist eine lateral offene trompetenförmige Einbuchtung 21 auf, wobei diese zusammen mit der großflächigen Aussparung 16 in die gleiche Richtung weist. Die Einbuchtung 21 kann mit Abrundungen am peripheren Eintritt bereitgestellt werden, wobei diese Abrundungen erfindungsgemäß, wie in den Figuren 3 und 5 gezeigt, auch weggelassen werden können. Nahe der theoretischen Mittelachse M der Innenampulle 20 hat die Einbuchtung 21 eine Einschnürung 23, hinter welcher sich die Einbuchtung 21 halbkreisartig erweitert. Hierdurch entstehen an der Fixierpartie 22 zwei gegenüber liegende Backen 25, 25'. Über die Einbuchtung 21 hinaus, weiter in die Fixierpartie 22 einschneidend zum Zylindermantel der Innenampulle hin, ist eine Dehnungsnut 24 vorgesehen, so dass beim Ein- und Ausdrücken eines Übertragungsteils 1 bzw. einer Fixierpartie 4 des Übertragungsteils 1 zwischen die Backen 25, 25', diese sich besser elastisch spreizen lassen. Nachdem beim Eindrücken des Übertragungsteils 1 die Einschnürung 23 dessen Querschnitt überwunden hat, rastet das Übertragungsteil 1 in der Einbuchtung 21 ein und die Backen 25, 25' verengen sich wieder.

Zur besseren Befestigung des Übertragungsteils 1 in der Innenampulle 20 und um zu verhindern, dass sich das Übertragungsteil 1 von dem Implantat 14 während des Transports trennt, wird eine untere Fixierpartie 26 der Innenampulle 20 bereitgestellt, die zur Aufnahme der konischen Implantatschulter 19 ausgebildet ist. Die untere Fixierpartie 26 der Innenampulle 20 weist zwei Stützflügel 27, 27' auf, die sich in Ausrichtung mit der Einbuchtung 21, etwas davon eingerückt, erstrecken, so dass eine eng passende Aufnahme für Implantatschulter 19 gebildet wird. Die Stützflügel 27, 27' können auch mit jeweiligen Abrundungen am peripheren Eintritt zur besseren Führung der Implantatschulter 19 bereitgestellt werden.

Somit wird die in den Stützflügeln 27, 27' abgestützte konische Implantatschulter 19 nach oben in Richtung des Übertragungsteils 1 beaufschlagt oder gepresst, womit weitere aus dem Stand der Technik bekannte Mittel zur Transportsicherung des dentalen Implantats in seinem unteren Bereich vermieden werden. Die erfindungsgemäßen Stützflügel können unabhängig von den vorstehend geschilderten Merkmalen, insbesondere unabhängig vom verbesserten Übertragungsteil mit dem Klemmring, mit jeder geeignet ausgebildeten Implantat/Übertragungsteil-Kombination eingesetzt werde, und stellen einen weiteren Aspekt der Erfindung dar, der wie erwähnt, das Problem der Transportersicherung des Übertragungsteils und/oder des Implantats löst.

Weiterhin kann die Innenampulle 20, wie in der Fig. 3 und 3A ersichtlich, mit vergrößerten Antirollrippen 20B ausgestattet werden, um ein unerwünschtes Abrollen oder das Drehen der Ampulle 20 zu verhindern. Darüber hinaus kann vorteilhafter Weise eine Orientierungsfläche 20A (siehe Fig. 3A) auf der zur Einbuchtung 21 entgegengesetzten Seite bereitgestellt werden.

Wenn in irgendeinem der Ansprüche erwähnte technische Merkmale mit einem Bezugszeichen versehen sind, wurden diese Bezugszeichen lediglich eingeschlossen, um die Verständlichkeit der Ansprüche zu erhöhen. Entsprechend haben diese Bezugszeichen keine einschränkende Auswirkung auf den Schutzumfang eines jeden Elements, das exemplarisch durch solche Bezugszeichen bezeichnet wird.

## Patentansprüche

1. Kombination aus einem Übertragungsteil (1) und einem dentalen Implantat (14), wobei das Übertragungsteil (1) eine Klemmpartie (8) zur klemmenden Verbindung mit dem Implantat (14) aufweist, wobei die Klemmpartie (8) eine Radialnut (11), einen in die Radialnut (11) einbringbaren Klemmring (13), und ein Kraftübertragungselement (10) zur Drehsicherung der klemmenden Verbindung umfasst, und wobei das Implantat (14) mit einem passend dimensionierten Hinterstich (18) für die klemmende Aufnahme des Klemmrings (13) ausgestattet ist.

2. Kombination aus einem Übertragungsteil (1) und einem dentalen Implantat (14) nach Anspruch 1, wobei der Klemmring (13) aus Polyetheretherketon (PEEK) ausgebildet ist, so dass eine sichere klemmende Verbindung in einer Flüssigkeit bereitgestellt wird.

3. Kombination aus einem Übertragungsteil (1) und einem dentalen Implantat (14) nach Anspruch 1 oder 2, wobei das Kraftübertragungselement (10) eine achtkantige Oberfläche aufweist.

4. Kombination aus einem Übertragungsteil (1) und einem dentalen Implantat (14) nach einem oder mehreren der Ansprüche 1-3, worin der Klemmring (13) in seinem nicht montierten Zustand einen Spalt (13A) aufweist.

5. Kombination aus einem Übertragungsteil (1) und einem dentalen Implantat (14) nach einem oder mehreren der Ansprüche 1-4, das weiterhin einen Fortsatz (2) mit einem Aussenvielkant und eine Fixierpartie (4) zur Aufnahme in eine Innenampulle (20) umfasst, wobei die Fixierpartie (4) zwischen dem Fortsatz (2) und der Klemmpartie (8) angebracht ist.

6. Kombination aus einer Innenampulle (20) in Verbindung mit der Kombination aus einem Übertragungsteil (1) und einem dentalen Implantat (14) gemäß einem oder mehreren der Ansprüche 1-6, wobei die Innenampulle eine obere Fixierpartie (22) hat, die bis zu einer großflächigen Aussparung (16) in der Innenampulle (20) zur Einführung und Herausnahme des Übertragungsteils (1) reicht, wobei die obere Fixierpartie (22) eine lateral offene im Wesentlichen trompetenförmige Einbuchtung (21) zur Aussparung (16) hin hat, die zur eng passenden Aufnahme eines Abschnitts des Übertragungsteils (1) ausgebildet ist, und eine untere Fixierpartie (26), die zur Aufnahme des Implantats (14) ausgebildet ist.

7. Kombination nach Anspruch 6, wobei die Einbuchtung (21) ausgebildet ist, um eine Fixierpartie (4) eines Übertragungsteils (1) klemmend aufzunehmen, und wobei die untere Fixierpartie (26) ausgebildet ist, um eine Implantatschulter (19) aufzunehmen.

8. Kombination nach Anspruch 6 oder 7, worin die Aussparung (16) an ihrem unteren, der Einbuchtung (21) entgegengesetzten Teil (16A) abgerundet ausgebildet ist.

## Claims

1. Combination of an abutment (1) and a dental implant (14), in which the abutment (1) has a clamping part (8) for clamping connection with the implant (14), in which the clamping part (8) encompasses a radial groove (11), a clamping ring (13), which can be introduced into the radial groove (11) and a force transmission element (10) for preventing rotation of the clamping connection and in which the implant (14) is equipped with a suitably dimensioned recess (18) for the clamping accommodation of the clamping ring (13).

2. Combination of an abutment (1) and a dental implant (14) according to claim 1, in which the clamping ring (13) is made of polyetheretherketone (PEEK), so that a secure clamping connection in a liquid is provided.

3. Combination of an abutment (1) and a dental implant (14) according to claim 1 or 2, in which the force transmission element (10) has an octagonal surface.

4. Combination of an abutment (1) and a dental implant (14) according to one or several of claims 1-3, in which the clamping ring (13) has a gap (13A) in its unassembled state.

5. Combination of an abutment (1) and a dental implant (14) according to one or several of claims 1-4, which also encompasses an extension (2) with an external polyhedron and fixing part (4) for accommodation in an inner ampoule (20), in which the fixing part (4) is attached between the extension (2) and the clamping part (8).

6. Combination of an inner ampoule (20) in conjunction with the combination of an abutment (1) and a dental implant (14) according to one or several of claims 1-6, in which the inner ampoule has a upper fixing part (22), which extends to a large area cut-out (16) in the inner ampoule (20) for introducing and removing the abutment (1), in which the upper fixing part (22) has a laterally open, essentially trumpet shaped indentation (21) towards the cut-out (16), which is designed to close fittingly accommodate a section of the abutment (1) and a lower fixing part (26), which is designed to accommodate the implant (14).

7. Combination according to claim 6, in which the indentation (21) is designed to clampingly accommodate a fixing part (4) of an abutment (1) and in which the lower fixing part (26) is designed to accommodate an implant shoulder (19).

8. Combination according to claim 6 or 7, in which the cut-out (16) is designed to be rounded on its lower part (16A) opposite to the indentation (21).

## Revendications

1. Combinaison constituée d'une pièce de transmission (1) et d'un implant dentaire (14), dans laquelle la pièce de transmission (1) comporte une partie de serrage (8) pour la liaison par serrage avec l'implant (14), dans laquelle la partie de serrage (8) comprend une rainure radiale (11), une bague de serrage (13) à introduire dans la rainure radiale (11), et un élément de transmission de force (10) pour le blocage en rotation de la liaison par serrage, et dans laquelle l'implant (14) est pourvu d'une dépouille (18) de dimension adaptée pour le logement par serrage de la bague de serrage (13).

2. Combinaison constituée d'une pièce de transmission (1) et d'un implant dentaire (14) selon la revendication 1, dans laquelle la bague de serrage (13) est réalisée en polyétheréthercétone (PEEK) de manière à fournir une liaison par serrage sûre dans un liquide.

3. Combinaison constituée d'une pièce de transmission (1) et d'un implant dentaire (14) selon la revendication 1 ou 2, dans laquelle l'élément de transmission de force (18) présente une surface octogonale.

4. Combinaison constituée d'une pièce de transmission (1) et d'un implant dentaire (14) selon une ou plusieurs des revendications 1 à 3, dans laquelle la bague de serrage (13) présente une fente (13A) à l'état non monté.

5. Combinaison constituée d'une pièce de transmission (1) et d'un implant dentaire (14) selon une ou plusieurs des revendications 1 à 4, qui comprend en outre un prolongement (2) avec un polygone extérieur et une partie de fixation (4) pour le logement dans une ampoule intérieure (20), la partie de fixation (4) étant placée entre le prolongement (2) et la partie de serrage (8).

6. Combinaison constituée d'une ampoule intérieure (20) en liaison avec la combinaison constituée d'une pièce de transmission (1) et d'un implant dentaire (4) selon une ou plusieurs des revendications 1 à 6, dans laquelle l'ampoule intérieure possède une partie de fixation supérieure (22) qui s'étend jusqu'à une découpe (16) de grande surface dans l'ampoule intérieure (20), pour l'introduction et l'extraction de la pièce de transmission (1), dans laquelle la partie de fixation supérieure (22) possède une échancrure (21) sensiblement en forme de trompette, ouverte latéralement, vers la découpe (16), laquelle est réalisée pour recevoir, de manière étroitement ajustée, un segment de la pièce de transmission (1), ainsi qu'une partie de fixation inférieure (26) qui est réalisée pour recevoir l' implant (14).

7. Combinaison selon la revendication 6, dans laquelle l'échancrure (21) est réalisée pour recevoir par serrage une partie de fixation (4) d'une pièce de transmission (1), et dans laquelle la partie de fixation inférieure (26) est réalisée pour recevoir un épaulement d'implant (19).

8. Combinaison selon la revendication 6 ou 7, dans laquelle la découpe (16) est réalisée arrondie dans sa partie (16A) inférieure, opposée à l'échancrure (21).
